# EUROPÄISCHE PATENTSCHRIFT

(11) **EP 3 382 080 B1**
(45) Veröffentlichungstag und Bekanntmachung des Hinweises auf die Patenterteilung: **07.08.2019**
(21) Anmeldenummer: 17163369.6
(22) Anmeldetag: 28.03.2017
(51) Int. Cl.: D04H 1/558, D04H 3/147, B30B 5/06, B30B 15/34

(54) **VERFAHREN UND VORRICHTUNG ZUR HERSTELLUNG EINES VLIESES AUS FASERN**
METHOD AND DEVICE FOR PRODUCING A NON-WOVEN FABRIC FROM FIBRES
PROCÉDÉ ET DISPOSITIF DE FABRICATION D'UN NON-TISSÉ À PARTIR DE FIBRES

(43) Veröffentlichungstag der Anmeldung: 03.10.2018
(73) Patentinhaber: Reifenhäuser GmbH & Co. KG Maschinenfabrik, 53844 Troisdorf (DE); Mann+Hummel GmbH, 71636 Ludwigsburg (DE)
(72) Erfinder: CINQUEMANI, Claudio, 50733 Köln (DE); FREY, Detlef, 53859 Niederkassel (DE); ORENDT, Stefan, 95512 Neudrossenfeld (DE); PEMSEL, Thomas, 71638 Ludwigsburg (DE)
(74) Vertreter: Rohmann, Michael

(56) Entgegenhaltungen:
- EP-A1- 1 726 699
- GB-A- 1 141 363
- US-A- 3 811 988
- US-A1- 2003 049 397

## Beschreibung

Die Erfindung betrifft ein Verfahren zur Herstellung eines Vlieses aus Fasern - insbesondere aus thermoplastischem Kunststoff - wobei die Fasern mittels zumindest einer Spinnerette ersponnen werden, anschließend gekühlt werden und daraufhin auf einer Ablageeinrichtung zur Vliesbahn abgelegt werden. Die Erfindung betrifft weiterhin eine entsprechende Vorrichtung zur Herstellung von Vliesen.

Verfahren und Vorrichtungen der eingangs genannten Art sind aus der Praxis in unterschiedlichen Ausführungsformen bekannt. Viele dieser bekannten Verfahren und Vorrichtungen stoßen jedoch an ihre Grenzen, wenn es darum geht, voluminöse Vliese mit geringer Dichte herzustellen, die eine ausreichende Steifheit und zugleich eine hohe Permeabilität aufweisen sollen. Die mit den bekannten Verfahren hergestellten steifen und permeablen Vliese zeichnen sich üblicherweise durch eine geringe Dicke und eine unerwünscht hohe Dichte aus.

Aus EP 1 726 699 A1 ist ein Verfahren der eingangs genannten Art bekannt. Hier wird die abgelegte Vliesbahn einer Heißfluid-Verfestigung unterzogen, wobei die Vliesbahn dabei flächig mit einem heißen Fluid, insbesondere mit Heißluft, beaufschlagt wird. Diese Maßnahmen haben sich grundsätzlich bewährt. Nichtsdestoweniger gibt es Erweiterungs- bzw. Verbesserungsmöglichkeiten.

Der Erfindung liegt das technische Problem zugrunde, ein Verfahren der eingangs genannten Art anzugeben, mit dem Vliese aus Fasern hergestellt werden können, die einerseits ein hohes Volumen und eine geringe Dichte aufweisen und andererseits ausreichend steif und permeabel sind. Fernerhin liegt der Erfindung das technische Problem zugrunde, eine entsprechende Vorrichtung zur Herstellung solcher Vliese anzugeben.

Zur Lösung dieses technischen Problems lehrt die Erfindung ein Verfahren zur Herstellung eines Vlieses aus Fasern - insbesondere aus thermoplastischem Kunststoff -, wobei die Fasern mittels zumindest einer Spinnerette ersponnen werden, anschließend mit Hilfe zumindest einer Kühlvorrichtung gekühlt werden und daraufhin auf einer Ablagevorrichtung zur Vliesbahn abgelegt werden, wobei die Vliesbahn in zumindest zwei - vorzugsweise in zwei - aufeinanderfolgenden Verfestigungsstufen jeweils einer Heißfluid-Verfestigung unterzogen wird, wobei die Vliesbahn in einer ersten Verfestigungsstufe flächig mit einem heißen Fluid - insbesondere mit Heißluft - beaufschlagt wird und wobei die Vliesbahn im Anschluss daran in einer zweiten Verfestigungsstufe - vorzugsweise in einem Doppelbandofen - flächig mit einem heißen Fluid, insbesondere mit Heißluft beaufschlagt wird und wobei hier zusätzlich und zugleich flächig Druck auf die Vliesbahn ausgeübt wird. - Es empfiehlt sich, dass die flächige Druckausübung auf die Vliesbahn mit einem Druck größer als 2 Pa, vorzugsweise größer als 3 Pa und bevorzugt größer als 4 Pa erfolgt. Zweckmäßigerweise erfolgt die flächige Druckausübung auf die Vliesbahn mit einem Druck zwischen 5 und 15 Pa, vorzugsweise zwischen 5 und 10 Pa.

Eine empfohlene Ausführungsform der Erfindung ist dadurch gekennzeichnet, dass die Fasern als Mehrkomponentenfasern, insbesondere als Bikomponentenfasern ersponnen werden und insbesondere eine Segmented-pie-Konfiguration aufweisen oder dass die Fasern als Mischung von Fasern aus zumindest zwei verschiedenen Arten von Fasern ersponnen werden. Vorzugsweise wird mit Mehrkomponentenfasern bzw. mit Bikomponentenfasern gearbeitet, bei denen eine Komponente mehr als 50 Gew.-%, bevorzugt mehr als 55 Gew.-% der Gesamtfaser bildet und wobei diese Komponente vorzugsweise aus einem Polyolefin und sehr bevorzugt aus einem Polypropylen besteht.

Es liegt im Rahmen der Erfindung, dass die Ablageeinrichtung für die Ablage der Fasern zur Vliesbahn als Ablagesiebband ausgebildet ist. - Nach einer besonders empfohlenen Ausführungsform des erfindungsgemäßen Verfahrens werden die auf der Ablageeinrichtung bzw. auf dem Ablagesiebband abgelegten Fasern unmittelbar der Heißfluid-Verfestigung zugeführt, ohne dass eine vorherige Vorverfestigung der Vliesbahn mit einem Walzenpaar, insbesondere mit einem Kompaktierwalzenpaar und/oder mit einem temperierten Presswalzenpaar erfolgt. Grundsätzlich könnte jedoch auch ein Walzenpaar zur Vorverfestigung zwischengeschaltet sein.

Erfindungsgemäß sind zwei Verfestigungsstufen für eine flächige Heißfluid-Verfestigung der Vliesbahn vorgesehen. Zweckmäßigerweise wird die erste flächige Heißfluid-Verfestigung auf der Ablageeinrichtung bzw. auf dem Ablagesiebband - auf dem die Fasern abgelegt wurden - durchgeführt. Vorzugsweise erfolgt die erste Heißfluid-Verfestigung als Vorverfestigung in einem Durchström-Ofen, in dem die Vliesbahn flächig mit dem Heißfluid bzw. mit Heißluft beaufschlagt wird. Bei dieser ersten - Heißfluid-Verfestigung wird empfohlenermaßen mit einer Fluidtemperatur gearbeitet, die unterhalb des Schmelzpunktes der am höchsten schmelzenden Komponente der Fasern liegt und bei der zumindest eine niedriger schmelzende Komponente - bei Bikomponentenfasern die niedriger schmelzende Komponente der Bikomponentenfasern - angeschmolzen bzw. aufgeschmolzen wird. Dadurch verbinden sich diese Fasern an den Kontaktstellen mit den benachbart liegenden Fasern. Auf diese Weise entsteht ein transportfähiger Vliesbahnverbund, der anschließend der zweiten Verfestigungsstufe zugeführt wird. Es empfiehlt sich, dass die erste Verfestigungsstufe bzw. der Durchström-Ofen zumindest zwei Heizzonen, vorzugsweise zwei Heizzonen aufweist. Es hat sich bewährt, dass diesen Heizzonen zumindest eine, vorzugsweise eine Kühlzone nachgeschaltet ist, die bevorzugt eine Länge von 0,2 bis 6 m, sehr bevorzugt eine Länge von 0,2 bis 3 m und besonders bevorzugt eine Länge von 0,2 bis 2 m aufweist. Zweckmäßigerweise wird die Vliesbahn in der ersten Verfestigungsstufe bzw. in der ersten Heißfluid-Verfestigung von einem heißen Fluid, insbesondere von heißer Luft mit einer Anströmgeschwindigkeit von 0,2 bis 15 m/s, bevorzugt von 1 bis 5 m/s und sehr bevorzugt von 1 bis 3 m/s angeströmt.

Erfindungsgemäß wird die Vliesbahn im Anschluss an die erste Heißfluid-Verfestigung in die zweite Verfestigungsstufe eingeführt und die Vliesbahn wird hier flächig mit einem heißen Fluid, insbesondere mit Heißluft beaufschlagt wird und zusätzlich und zugleich wird flächig Druck auf die Vliesbahn ausgeübt. Zweckmäßigerweise wird diese zweite Verfestigungsstufe von zumindest einem Doppelbandofen, vorzugsweise von einem Doppelbandofen gebildet. Es liegt weiterhin im Rahmen der Erfindung, dass in diesem Doppelbandofen die Endverfestigung und Kalibrierung der Vliesbahn stattfindet. Empfohlenermaßen ist in dem Doppelbandofen die Vliesbahn zwischen zwei umlaufenden Endlosbändern bzw. Siebbändern eingeklemmt und zwar bevorzugt zwischen einem Transportband und einem darüber angeordneten höhenverstellbaren Kalibrierband. Bei dem Transportband handelt es sich nach einer Ausführungsform der Erfindung um das Ablagesiebband. Mit Hilfe dieser beiden Siebbänder bzw. Endlosbänder wird flächig Druck auf die Vliesbahn ausgeübt, die dabei bzw. zugleich von dem heißen Fluid bzw. von der Heißluft durchströmt wird. Vorzugsweise wird in der zweiten Verfestigungsstufe bzw. in dem Doppelbandofen mit einer Fluidtemperatur gearbeitet, die unterhalb des Schmelzpunktes der am höchsten schmelzenden Komponente der Fasern liegt. Zweckmäßigerweise wird dabei zumindest eine niedriger schmelzende Komponente der Fasern - bei Bikomponentenfasern die niedriger schmelzende Komponente - angeschmolzen bzw. aufgeschmolzen. Es empfiehlt sich, dass die Vliesbahn in der zweiten Verfestigungsstufe bzw. in dem Doppelbandofen von einem heißen Fluid - insbesondere von heißer Luft - mit einer Anströmgeschwindigkeit von von 0,2 bis 15 m/s, bevorzugt von 1 bis 5 m/s und sehr bevorzugt von 1 bis 3 m/s angeströmt wird. Es hat sich bewährt, dass die zweite Verfestigungsstufe bzw. der Doppelbandofen mehrere - bevorzugt einzeln regelbare - Heizzonen aufweist. Es liegt im Rahmen der Erfindung, dass die Heizzonen jeweils von oben und/oder von unten separat durchströmt werden können. Gemäß einer bevorzugten Ausführungsvariante der Erfindung ist den Heizzonen zumindest eine Kühlzone und bevorzugt sind den Heizzonen zwei Kühlzonen nachgeschaltet, um die Vliesbahn wieder abzukühlen. - Nach bewährter Ausführungsform der Erfindung beträgt die Temperatur des Heißfluids bzw. der Heißluft für die erste Heißfluid-Verfestigung und/oder für die zweite Heißfluid-Verfestigung mindestens 100 °C, vorzugsweise mehr als 100 °C und bevorzugt 120 bis 160 °C, sehr bevorzugt mehr als 130 °C.

Eine besonders empfohlene Ausführungsform des erfindungsgemäßen Verfahrens ist dadurch gekennzeichnet, dass die Vliesbahn im Anschluss an die Heißfluid-Verfestigung und bevorzugt im Anschluss an die zweite Verfestigungsstufe bzw. im Anschluss an die zweite Heißfluid-Verfestigung elektrisch aufgeladen wird. Die elektrische Aufladung erfolgt zweckmäßigerweise nach der vorstehend beschriebenen Abkühlung der Vliesbahn im Rahmen der zweiten Heißfluid-Verfestigung. Die elektrische Beladung der Vliesbahn erfolgt empfohlenermaßen durch Führung der Vliesbahn durch ein statisches elektrisches Feld. Eine empfohlene Ausführungsvariante zeichnet sich dadurch aus, dass die elektrische Aufladeeinrichtung zur Aufladung der Vliesbahn zwei bis drei Beladebalken mit jeweils 30 kV aufweist. Zweckmäßigerweise ist im Bereich der elektrischen Aufladeeinrichtung zumindest eine Absaugeinrichtung angeordnet, mit der bei den hohen Spannungen entstehendes Ozon abgesaugt werden kann, das dann zweckmäßigerweise einer Ozonzersetzungseinrichtung zugeführt wird. In dieser Ozonzersetzungseinrichtung wird das Ozon wieder in Sauerstoff umgewandelt.

Eine sehr bevorzugte Ausführungsform, der im Rahmen der Erfindung ganz besondere Bedeutung zukommt, ist dadurch gekennzeichnet, dass die Fasern mit der Spinnerette als Endlosfilamente ersponnen werden und dass die Vliesbahn als Spinnvlies mit einem Spunbond-Verfahren erzeugt wird. In Bezug auf diese bevorzugte Ausführungsform kann bei den vorstehend und nachfolgend noch beschriebenen Ausführungsvarianten der Begriff "Fasern" auch jeweils durch "Endlosfilamente" oder "Filamente" ersetzt werden. - Es liegt im Rahmen der Erfindung, dass die Endlosfilamente mittels zumindest einer Spinnerette ersponnen werden, anschließend mit Hilfe zumindest einer Kühlvorrichtung gekühlt werden, daraufhin mittels zumindest einer Verstreckvorrichtung verstreckt werden und dass die verstreckten Endlosfilamente auf einer Ablageeinrichtung, bevorzugt auf einem Ablagesiebband zur Vliesbahn bzw. zum Spinnvlies abgelegt werden. Diese Vliesbahn wird dann der Heißfluid-Verfestigung unterzogen.

Nach besonders empfohlener Ausführungsform des erfindungsgemäßen Verfahrens werden Endlosfilamente in Form von Mehrkomponentenfilamenten, vorzugsweise in Form von Bikomponentenfilamenten hergestellt. Eine sehr bevorzugte Ausführungsform des erfindungsgemäßen Verfahrens ist dadurch gekennzeichnet, dass die Mehrkomponentenfilamente bzw. Bikomponentenfilamente mit einer Segmented-pie-Konfiguration ersponnen werden. Die Mehrkomponentenfilamte bzw. Bikomponentenfilamente können aber auch insbesondere eine Kern-Mantel-Konfiguration und/oder eine Seite-an-Seite-Konfiguration aufweisen. Grundsätzlich können auch Mischungen der verschiedenen Konfigurationen der Bikomponentenfilamente bzw. Mehrkomponentenfilamente eingesetzt werden. Es liegt im Rahmen der Erfindung, dass die Komponenten der Mehrkomponentenfilamente bzw. die beiden Komponenten der Bikomponentenfilamente unterschiedliche Schmelzpunkte aufweisen.

Eine sehr bewährte Ausführungsform der Erfindung ist dadurch gekennzeichnet, dass mit Mehrkomponentenfilamenten bzw. mit Bikomponentenfilamenten gearbeitet wird, bei denen eine Komponente mehr als 50 Gew.-%, vorzugsweise mehr als 55 Gew.-%, bevorzugt mehr als 60 Gew.-% und sehr bevorzugt mehr als 65 Gew.-% des Gesamtfilamentes bildet. Gemäß einer empfohlenen Ausführungsform der Erfindung beträgt der Anteil einer Komponente der Mehrkomponentenfilamente bzw. Bikomponentenfilamente 65 bis 75 Gew.-%.

Eine sehr bevorzugte Ausführungsform des erfindungsgemäßen Verfahrens zeichnet sich dadurch aus, dass zumindest eine Komponente, vorzugsweise beide bzw. alle Komponenten der Mehrkomponentenfilamente bzw. Bikomponentenfilamente aus einem Polyolefin bestehen. Zweckmäßigerweise handelt es sich bei diesem Polyolefin um Polypropylen. Für die Komponenten der Endlosfilamente können auch Polyolefin-Blends eingesetzt werden. Die Begriffe "Polyolefin" und "Polypropylen" umfassen gemäß einer Ausführungsvariante der Erfindung auch entsprechende Blends von Polyolefinen bzw. von Polypropylenen oder auch Copolymere von Polyolefinen bzw. von Polypropylenen.

Nach einer Ausführungsform der Erfindung werden die Endlosfilamente als Mischung von Endlosfilamenten aus zumindest zwei verschiedenen Arten von Endlosfilamenten ersponnen. Zweckmäßigerweise haben dabei die Kunststoffe von zumindest zwei Arten von Endlosfilamenten unterschiedliche Schmelzpunkte. Die Filamente einer Filamentart können dabei gleichsam als Bindefasern eingesetzt werden, die in einer nachfolgenden Verfestigung bzw. Heißfluid-Verfestigung aufgeschmolzen werden bzw. eher aufgeschmolzen werden als die anderen bzw. übrigen Filamente. Bei den gemischten Filamentarten kann es sich sowohl um Monokomponentenfilamente als auch um Mehrkomponentenfilamente handeln.

Es liegt im Rahmen der Erfindung, dass mittels zumindest einer Spinnerette Mehrkomponentenfilamente, vorzugsweise Bikomponentenfilamente als Endlosfilamente ersponnen werden und diese anschließend mit zumindest einer Kühlvorrichtung gekühlt werden. Eine besonders bevorzugte Ausführungsform des erfindungsgemäßen Verfahrens ist dadurch gekennzeichnet, dass zwischen der Spinnerette und der Kühlvorrichtung zumindest eine Monomerabsaugungsvorrichtung zur Absaugung von Monomeren bzw. zur Absaugung von Spinnrauch angeordnet ist. Die Kühlvorrichtung ist zweckmäßigerweise in zumindest zwei, vorzugsweise in zwei Kühlkammerabschnitte unterteilt, in welchen Kühlkammerabschnitten die Endlosfilamente mit Kühlluft unterschiedlicher Temperatur beaufschlagt werden. Nach Durchlaufen der Kühlvorrichtung werden die Endlosfilamente in eine Verstreckvorrichtung eingeführt. Es liegt im Rahmen der Erfindung, dass die Endlosfilamente durch ein geschlossenes Aggregat aus Kühlvorrichtung und Verstreckvorrichtung geführt werden, in dem außer der Zuführung des Kühlfluids bzw. der Kühlluft in der Kühlvorrichtung keine weitere Fluidzuführung bzw. Luftzuführung erfolgt.

Eine sehr empfohlene Ausführungsform der Erfindung ist dadurch gekennzeichnet, dass die Endlosfilamente zwischen der Verstreckvorrichtung und der Ablageeinrichtung - insbesondere dem Ablagesiebband - durch zumindest einen Diffusor geführt werden. Nach sehr bevorzugter Ausführungsform sind zwischen Verstreckvorrichtung und Ablageeinrichtung - insbesondere Ablagesiebband - zumindest zwei Diffusoren, insbesondere zwei Diffusoren angeordnet. Zweckmäßigerweise ist zwischen den beiden Diffusoren ein Umgebungslufteintrittsspalt zur Einführung von Umgebungsluft vorgesehen. Es liegt im Rahmen der Erfindung, dass die beiden Diffusoren außer dem Umgebungslufteintrittsspalt keine weitere Luftzuführung aufweisen.

Bei dem Spunbond-Verfahren zur Erzeugung der erfindungsgemäßen Endlosfilamente kann durch separate Regelung der Kühlluft- und Verstreckluft gezielt die Filamentfeinheit eingestellt werden und hierdurch ist wiederum die Luftdurchlässigkeit der Vliesbahn beeinflussbar. - Vorzugsweise erfolgt die Ablage der verstreckten Endlosfilamente auf einem Ablagesiebband, das mit einer Geschwindigkeit zwischen 10 bis 150 m/min läuft. Das Ablagesiebband ist zweckmäßigerweise als Endlosband ausgebildet.

Es liegt im Rahmen der Erfindung, dass bei dem erfindungsgemäßen Verfahren Spinnvliese bzw. Vliesbahnen mit einem Flächengewicht zwischen 40 und 1000 g/m², vorzugsweise zwischen 40 und 250 g/m² erzeugt werden. Gemäß einer empfohlenen Ausführungsvariante ist eine Messeinrichtung vorgesehen, mit der die Luftdurchlässigkeit der Vliesbahn - zweckmäßigerweise online - bestimmt werden kann. Diese Messeinrichtung ermöglicht es unmittelbar an der produzierten Vliesbahn Fehler oder Abweichungen von einem Sollwert festzustellen und entsprechend zu korrigieren. Grundsätzlich kann die Luftdurchlässigkeit der hergestellten Vliesbahn aber auch offline bestimmt werden.

Zur Lösung des technischen Problems lehrt die Erfindung weiterhin eine Vorrichtung zur Herstellung eines Vlieses aus Fasern, vorzugsweise aus thermoplastischem Kunststoff, wobei zumindest eine Spinnerette zum Erspinnen der Fasern, zumindest eine Kühlvorrichtung zum Kühlen der Fasern und zumindest eine Ablagevorrichtung, vorzugsweise ein Ablagesiebband zur Ablage der Fasern zur Vliesbahn vorgesehen ist, wobei zumindest zwei, vorzugsweise zwei Verfestigungsstufen für eine Heißfluid-Verfestigung der Vliesbahn vorhanden sind, wobei die erste Verfestigungsstufe zur flächigen Beaufschlagung der auf dem Ablagesiebband geführten Vliesbahn mit einem heißen Fluid bzw. mit Heißluft eingerichtet ist und wobei die zweite Verfestigungsstufe zumindest einen Doppelbandofen aufweist, in dem die Vliesbahn zwischen zwei umlaufenden Bändern bzw. Endlosbändern geführt wird und in dem die Vliesbahn flächig mit einem heißen Fluid bzw. mit Heißluft beaufschlagbar ist und in dem zusätzlich und zugleich - insbesondere mit den beiden umlaufenden Bändern bzw. Endlosbändern - flächig Druck auf die Vliesbahn ausübbar ist. Eine bevorzugte Ausführungsform der Erfindung ist dadurch gekennzeichnet, dass die erste Verfestigungsstufe zumindest einen über dem Ablagesiebband angeordneten beheizten Durchström-Ofen zur flächigen Beaufschlagung der auf dem Ablagesiebband geführten Vliesbahn mit einem heißen Fluid bzw. mit Heißluft aufweist. Gemäß besonders empfohlener Ausführungsform der Erfindung ist die Siebbandzone des Ablagesiebbandes zwischen dem Ablagebereich der Endlosfilamente und der ersten Verfestigungsstufe kompaktierwalzenfrei bzw. presswalzenfrei ausgebildet. Es liegt im Rahmen der Erfindung, dass im Anschluss an die beiden Verfestigungsstufen eine elektrische Aufladeeinrichtung zum elektrischen Aufladen der verfestigten Vliesbahn vorgesehen ist.

Mit dem erfindungsgemäßen Verfahren und mit der erfindungsgemäßen Vorrichtung können bevorzugt Vliesbahnen bzw. Spinnvliese aus Endlosfilamenten hergestellt werden, die ein Flächengewicht zwischen 40 und 1000 g/m², vorzugsweise ein Flächengewicht zwischen 40 und 250 g/m² aufweisen. Diese Spinnvliese zeichnen sich durch besonders vorteilhafte Eigenschaften aus. - Es liegt im Rahmen der Erfindung, dass ein erfindungsgemäß hergestelltes Spinnvlies Bestandteil eines Laminates aus mehreren Lagen ist, wobei zumindest eine Lage bzw. ein Teil der Lagen ebenfalls aus Spinnvliesen bzw. Vliesbahnen gebildet wird. Hier können beispielsweise Meltblown-Vliese zum Einsatz kommen. Nach einer Ausführungsvariante kann das Laminat bzw. Lagenaggregat bezüglich seiner Dickenausdehnung einen Gradienten des Faserdurchmessers bzw. Filamentdurchmessers aufweisen. Ein solches Laminat bzw. Lagenaggregat kann insbesondere mittels einer Mehrzahl von hintereinander geschalteten Spinnbalken erzeugt werden. Bevorzugt wird mit einem vorstehend beschriebenen Verfahren und/oder mit einer vorstehend beschriebenen Vorrichtung ein Vlies aus Fasern - vorzugsweise aus thermoplastischem Kunststoff - erzeugt, das ein Flächengewicht zwischen 40 und 250 g/m² aufweist und als Isolationsmaterial und/oder Verpackungsmaterial einsetzbar ist.

Der Erfindung liegt die Erkenntnis zugrunde, dass mit dem erfindungsgemäßen Verfahren und mit der erfindungsgemäßen Vorrichtung auf einfache Weise voluminöse Vliesbahnen bzw. Spinnvliese mit geringer Dichte erzeugt werden können, die sich zudem durch eine ausgezeichnete Steifigkeit bzw. Festigkeit auszeichnen und eine hervorragende Permeabilität aufweisen. Die hergestellten Vliesbahnen bzw. Spinnvliese weisen einen vorteilhaft geringen Abrieb auf und zeigen eine optimale Elastizität. Das erfindungsgemäße Verfahren zeichnet sich durch eine hohe Produktivität aus und kann mit verhältnismäßig geringen Kosten durchgeführt werden. Fernerhin ist die erfindungsgemäße Vorrichtung in vorteilhafter Weise wenig komplex und wenig aufwendig aufgebaut.

Die erfindungsgemäß hergestellten Vliese bzw. Spinnvliese weisen optimale Isolationseigenschaften auf und zeigen insbesondere bei Dichten von 50 bis 500 kg/m³ eine verhältnismäßig geringe Wärmeleitung bei nichtsdestoweniger ausreichender mechanischer Widerstandsfähigkeit. Diese Vliese bzw. Spinnvliese eignen sich deshalb hervorragend als Komponenten von Kühltaschen, Mikrowellen-Trays oder von Behältern für Heißgetränke und dergleichen. Weitere Vorteile der erfindungsgemäß erzeugten Vliese sind ihre einfache Faltbarkeit sowie ihre vorteilhaften Schallschutzeigenschaften. Wegen der optimalen mechanischen Eigenschaften sowie aufgrund der erfindungsgemäß erzielbaren Steifigkeit der Vliese können diese vorteilhaft auch für Verpackungen bzw. als Bestandteil von Verpackungen verwendet werden sowie als Komponenten von Aufbewahrungsboxen und dergleichen. Hier kann im Übrigen auch die vorteilhafte Verwendung der erfindungsgemäß hergestellten Vliese als Bestandteil von Laminaten zum Einsatz kommen. Solche Laminate sind beispielsweise Folie-Vlies-Folie-Laminate und ähnliche Laminate. Erwähnenswert ist weiterhin, dass die Vliese im Rahmen der Erfindung mit verhältnismäßig gleichmäßiger Struktur erzeugt werden können und deshalb auch einfach bedruckbar sind. Dies fördert ihren Einsatz für Verpackungen und dergleichen. Letztendlich können die erfindungsgemäß hergestellten Vliese bzw. Spinnvliese auch als Komponenten von Filtern zum Einsatz kommen. Zusammenfassend ist festzustellen, dass die erfindungsgemäß erzeugten Vliese bzw. Spinnvliese sich durch eine Vielzahl von Verwendungs- bzw. Einsatzmöglichkeiten auszeichnen.

Nachfolgend wird die Erfindung anhand einer lediglich ein Ausführungsbeispiel darstellenden Zeichnung näher erläutert. Es zeigen in schematischer Darstellung:
- Fig. 1: einen Vertikalschnitt durch einen ersten Teil einer erfindungsgemäßen Vorrichtung,

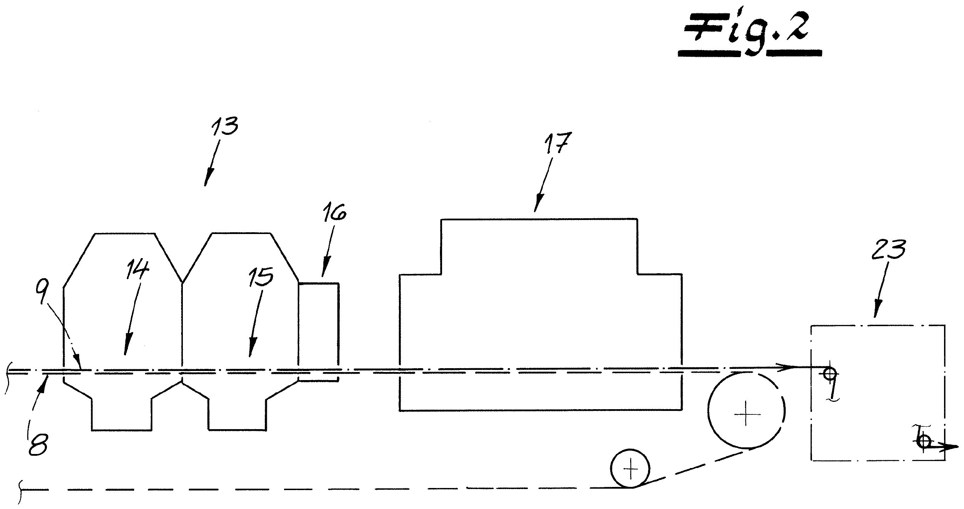

- Fig. 2: einen Vertikalschnitt durch einen zweiten Teil der erfindungsgemäßen Vorrichtung,

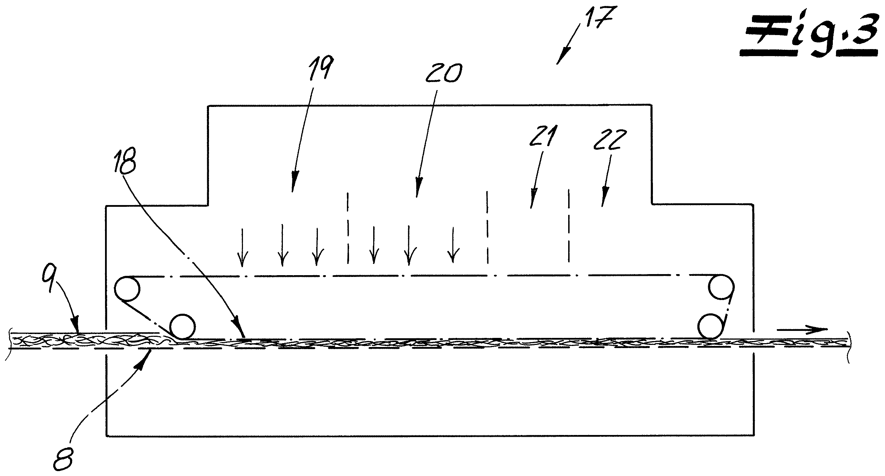

- Fig. 3: den Ausschnitt A aus der Fig. 2 in vergrößerter Darstellung,
- Fig. 4: den Ausschnitt B aus der Fig. 2 in vergrößerter Darstellung und
- Fig. 5a, b, c, d: Querschnitte durch Endlosfilamente bzw. Bikomponentenfilamente nach bevorzugten Ausführungsformen der Erfindung.

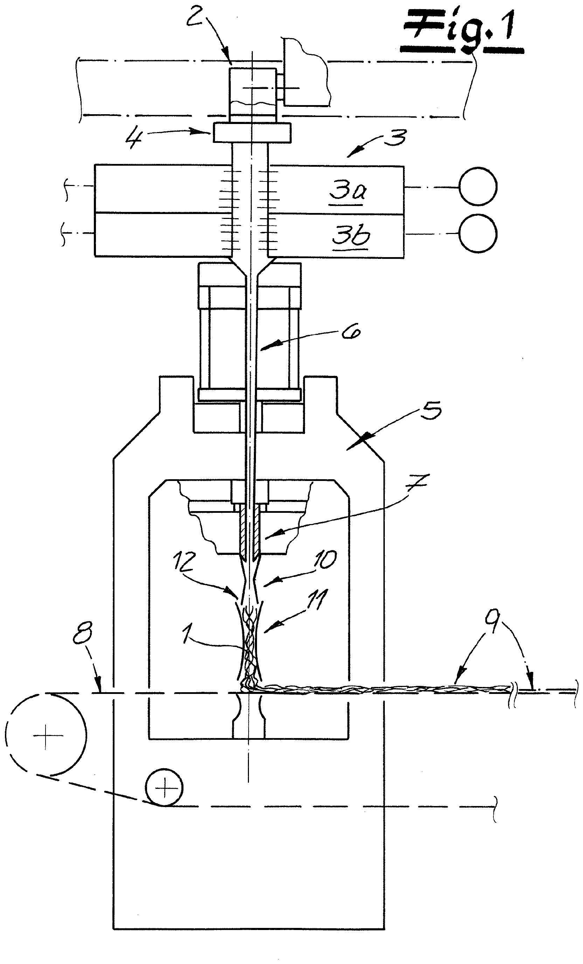

In den Figuren ist eine erfindungsgemäße Vorrichtung zur Herstellung von Spinnvliesen aus Endlosfilamenten 1 dargestellt. Die Endlosfilamente 1 bestehen nach bevorzugter Ausführungsform der Erfindung aus thermoplastischem Kunststoff und besonders bevorzugt aus Polyolefinen. Bei der in Fig. 1 dargestellten Vorrichtung handelt es sich um eine Spunbond-Vorrichtung zur Herstellung von Spunbond-Vliesen aus Endlosfilamenten 1. Mit der erfindungsgemäßen Vorrichtung werden die Endlosfilamente 1 mittels einer Spinnerette 2 ersponnen und anschließend in einer Kühlvorrichtung 3 gekühlt. Zwischen der Spinnerette 2 und der Kühlvorrichtung 3 ist gemäß bevorzugter Ausführungsform und im Ausführungsbeispiel eine Monomerabsaugungsvorrichtung 4 zur Absaugung von in diesem Zwischenraum entstehendem Spinnrauch vorgesehen. Die Kühlvorrichtung 3 weist empfohlenermaßen und im Ausführungsbeispiel zwei übereinander bzw. in Filamentströmungsrichtung hintereinander angeordnete Kühlkammern 3a, 3b auf, in denen die Endlosfilamente 1 mit Kühlluft unterschiedlicher Temperatur beaufschlagt werden. Der Kühlvorrichtung 3 ist in Filamentströmungsrichtung eine Verstreckvorrichtung 5 nachgeschaltet und diese Verstreckvorrichtung 5 weist bevorzugt und im Ausführungsbeispiel einen in Strömungsrichtung der Endlosfilamente 1 konvergierenden Zwischenkanal 6 sowie einen daran anschließenden Verstreckkanal 7 auf. Gemäß sehr bevorzugter Ausführungsform und im Ausführungsbeispiel ist das Aggregat aus der Kühlvorrichtung 3 und der Verstreckvorrichtung 5 als geschlossenes Aggregat ausgebildet, in dem außer der Zuführung des Kühlfluids bzw. der Kühlluft in der Kühlvorrichtung 3 keine weitere Fluidzuführung bzw. Luftzuführung erfolgt.

Die Endlosfilamente 1 werden auf einer im Ausführungsbeispiel als Ablagesiebband 8 ausgebildeten Ablageeinrichtung zur Vliesbahn 9 abgelegt. Gemäß empfohlener Ausführungsform und im Ausführungsbeispiel werden die Endlosfilamente 1 zwischen der Verstreckvorrichtung 5 und dem Ablagesiebband 8 durch zumindest einen Diffusor 10, 11 geführt. Vorzugsweise und im Ausführungsbeispiel sind zwei in Strömungsrichtung der Endlosfilamente 1 hintereinander angeordnete Diffusoren 10 und 11 vorgesehen. Empfohlenermaßen und im Ausführungsbeispiel ist zwischen den beiden Diffusoren 10, 11 ein Umgebungslufteintrittsspalt 12 für den Eintritt von Umgebungsluft vorgesehen. Im Anschluss an die Diffusoren 10, 11 werden die Endlosfilamente 1 auf dem Ablagesiebband zur Vliesbahn 9 abgelegt. Bei dem Ablagesiebband 8 handelt es sich bevorzugt und im Ausführungsbeispiel um ein endlos umlaufendes Ablagesiebband 8.

Die auf dem Ablagesiebband 8 abgelegte Vliesbahn 9 aus den Endlosfilamenten 1 wird dann bevorzugt und im Ausführungsbeispiel ohne Zwischenschaltung von Kompaktierwalzen oder Presswalzen durch die erste Verfestigungsstufe bzw. durch die erste Heißfluid-Verfestigung in Form des Durchström-Ofens 13 geführt. Hier findet bevorzugt und im Ausführungsbeispiel eine erste flächige Heißluft-Beaufschlagung der Vliesbahn 9 auf dem Ablagesiebband 8 statt. Dazu wird zweckmäßigerweise und im Ausführungsbeispiel die Vliesbahn 9 von oben flächig mit Heißluft beaufschlagt, wobei diese Heißluft bevorzgt eine Anströmgeschwindigkeit von 1 bis 3 m/s aufweist sowie empfohlenermaßen eine Temperatur aufweist, die geringer ist als die höher schmelzende Kunststoffkomponente der Endlosfilamente 1. Vorzugsweise und im Ausführungsbeispiel weist die erste Verfestigungsstufe bzw. der Durchström-Ofen 13 zwei in Förderrichtung der Vliesbahn 9 hintereinander angeordnete Heizzonen 14, 15 auf, in denen die Vliesbahn 9 mit der Heißluft beaufschlagt wird. An die Heizzonen 14, 15 schließt zweckmäßigerweise und im Ausführungsbeispiel eine Kühlzone 16 an.

Nach der ersten Verfestigungsstufe bzw. nach dem Durchlaufen des Durchström-Ofens 13 wird die Vliesbahn 9 in die zweite Verfestigungsstufe bzw. in die zweite Heißfluid-Verfestigung eingeführt, die im Ausführungsbeispiel als Doppelband-Ofen 17 ausgebildet ist. In dieser zweiten Verfestigungsstufe bzw. in dem Doppelbandofen 17 wird die Vliesbahn 9 flächig mit einem heißen Fluid und zwar im Ausführungsbeispiel mit Heißluft beaufschlagt und es wird zusätzlich und zugleich flächig Druck auf die Vliesbahn 9 ausgeübt. Diese Druckausübung erfolgt bevorzugt und im Ausführungsbeispiel mit einem über dem Ablagesiebband 8 angeordneten Kalibrierband 18, das empfohlenermaßen und im Ausführungsbeispiel bezüglich des Ablagesiebbandes 8 höhenverstellbar ausgebildet ist. Zweckmäßigerweise und im Ausführungsbeispiel ist das Kalibrierband 18 ebenfalls als Endlosband ausgeführt. Die Vliesbahn 9 wird gleichsam zwischen dem Ablagesiebband 8 und dem Kalibrierband 18 eingeklemmt und auf diese Weise wird ein definierter Druck auf die Vliesbahn 9 ausgeübt. Zugleich wird in dem Doppelbandofen 17 die Vliesbahn 9 mit der Heißluft beaufschlagt. Dabei kann die Vliesbahn 9 von oben und/oder von unten mit Heißluft angeströmt werden. Vorzugsweise und im Ausführungsbeispiel beträgt die Anströmgeschwindigkeit der Heißluft 1 bis 3 m/s und die Temperatur der Heißluft ist zweckmäßigerweise geringer als die Schmelztemperatur der höher schmelzenden Kunststoffkomponente der Endlosfilamente 1. Empfohlenermaßen und im Ausführungsbeispiel weist der Doppelbandofen 17 zwei Heizfelder 19, 20 auf, in denen die Vliesbahn 9 jeweils mit Heißluft beaufschlagt wird. Bevorzugt und im Ausführungsbeispiel schließen in Förderrichtung der Vliesbahn 9 an die Heizfelder 19, 20 zwei Kühlfelder 21, 22 an. Vorzugsweise sind die beiden Heizfelder 19, 20 einzeln bzw. separat regelbar. Die Kühlfelder 21, 22 sind insbesondere dazu vorgesehen, um die Vliesbahn 9 vor der elektrischen Beladung wieder zu kühlen und den Schrumpfprozess definiert abzubrechen.

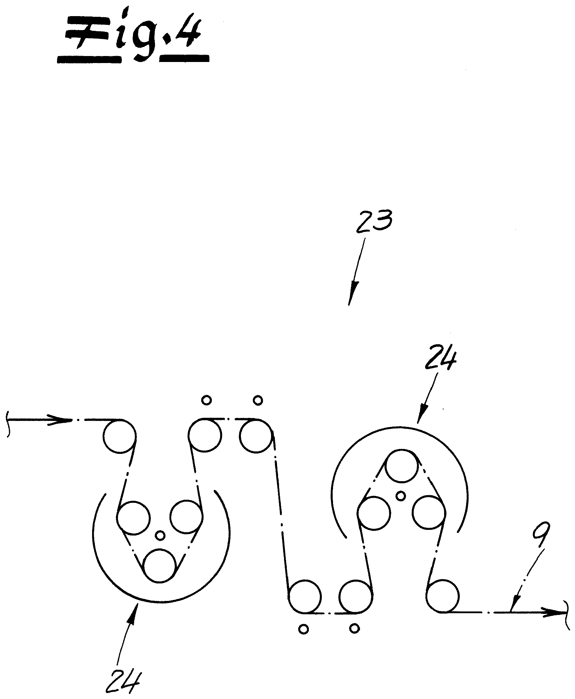

Im Anschluss an die zweite Verfestigungsstufe bzw. in Förderrichtung hinter dem Doppelbandofen 17 ist nach bevorzugter Ausführungsform und im Ausführungsbeispiel eine elektrische Aufladeeinrichtung 23 für die elektrische Aufladung der Vliesbahn 9 angeordnet. Hier wird die Vliesbahn 9 mit Hilfe mehrerer elektrischer Beladebalken 24 elektrisch aufgeladen. Die elektrische Auflageeinrichtung 23 ist in der Fig. 4 vergrößert dargestellt. In Förderrichtung hinter der elektrischen Aufladeeinrichtung 23 wird die Vliesbahn 9 bevorzugt aufgewickelt (in den Figuren nicht dargestellt). Es liegt im Übrigen im Rahmen der Erfindung, dass an geeigneter Stelle, beispielsweise in Förderrichtung hinter der elektrischen Aufladeeinrichtung 23 eine in den Figuren nicht dargestellte Messeinrichtung vorgesehen wird, mit der die Luftdurchlässigkeit der Vliesbahn 9 - vorzugsweise online - bestimmt werden kann. Dadurch werden an der produzierten Vliesbahn 9 Fehler oder Abweichungen von einem Sollwert unmittelbar festgestellt und es kann direkt eine Korrektur durch Anpassung von Anlagenparametern erfolgen.

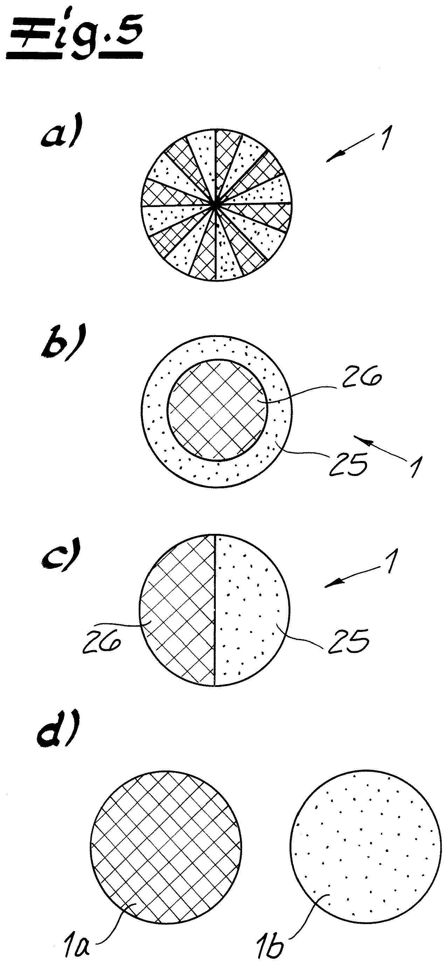

In der Fig. 5 sind im Übrigen bevorzugte Querschnittskonfigurationen von mit dem erfindungsgemäßen Verfahren hergestellten Endlosfilamenten 1 dargestellt. Die Fig. 5a, b und c zeigen Querschnittskonfigurationen von nach empfohlener Ausführungsform der Erfindung eingesetzten Bikomponentenfilamenten. Besonders bevorzugt ist im Rahmen der Erfindung die in der Fig. 5a dargestellte Segmented-pie-Konfiguration. Grundsätzlich können die Endlosfilamente aber auch die in der Fig. 5b dargestellte Kern-Mantel-Konfiguration aufweisen. Hier bildet die erste Kunststoffkomponente 25 den Mantel des Endlosfilamentes 1 und die zweite Kunststoffkomponente 26 den Kern. Eine andere bevorzugte Ausführungsform ist die in der Fig. 5c dargestellte Seite-an-Seite-Konfiguration der Endlosfilamente 1, in der die beiden Kunststoff-Komponenten 25, 26 jeweils eine Hälfte (Seite) des Querschnittes ausfüllen. Nach besonders bevorzugter Ausführungsform der Erfindung bestehen die beiden Kunststoffkomponenten 25, 26 aus zumindest einem Polyolefin, beispielsweise aus Polypropylen. Die Fig. 5d zeigt Querschnittskonfigurationen von zwei unterschiedlichen Endlosfilamenten 1a, 1b, die Bestandteil einer gemäß einer Ausführungsform der Erfindung eingesetzten Mischung von zwei unterschiedlichen Arten von Filamenten sind. Dabei haben die Kunststoffe der beiden Endlosfilamente 1a, 1b vorzugsweise unterschiedliche Schmelzpunkte. Die eine Art von Endlosfilamenten 1b mag hier gleichsam als Bindefaserkomponente wirken, wobei diese Endlosfilamente 1b in einer Verfestigung bzw. Heißfluid-Verfestigung aufgeschmolzen werden bzw. zumindest teilweise aufgeschmolzen werden.

## Patentansprüche

1. Verfahren zur Herstellung eines Vlieses aus Fasern, insbesondere aus thermoplastischem Kunststoff, wobei die Fasern mittels zumindest einer Spinnerette (2) ersponnen werden, anschließend gekühlt werden und auf einer Ablageeinrichtung zur Vliesbahn abgelegt werden, **dadurch gekennzeichnet, dass**
die Vliesbahn (9) in zumindest zwei aufeinanderfolgenden Verfestigungsstufen jeweils einer Heißfluid-Verfestigung unterzogen wird, dass die Vliesbahn (9) in einer ersten Verfestigungsstufe flächig mit einem heißen Fluid - insbesondere mit Heißluft - beaufschlagt wird und dass die Vliesbahn (9) im Anschluss daran in einer zweiten Verfestigungsstufe - vorzugsweise in einem Doppelbandofen (17) - flächig mit einem heißen Fluid - insbesondere mit Heißluft beaufschlagt wird und dass hier zusätzlich und zugleich flächig Druck auf die Vliesbahn ausgeübt wird.

2. Verfahren nach Anspruch 1, **dadurch gekennzeichnet, dass** die flächige Druckausübung auf die Vliesbahn mit einem Druck größer als 2 Pa, vorzugsweise größer als 3 Pa und bevorzugt größer als 4 Pa erfolgt.

3. Verfahren nach einem der Ansprüche 1 oder 2, **dadurch gekennzeichnet, dass** die Fasern als Mehrkomponentenfasern, insbesondere als Bikomponentenfasern ersponnen werden und insbesondere eine Segmented-pie-Konfiguration aufweisen oder dass die Fasern als Mischung von Fasern aus zumindest zwei verschiedenen Arten von Fasern ersponnen werden.

4. Verfahren nach einem der Ansprüche 1 bis 3, **dadurch gekennzeichnet, dass** mit Mehrkomponentenfasern bzw. mit Bikomponentenfasern gearbeitet wird, bei denen eine Komponente mehr als 50 Gew.-%, bevorzugt mehr als 55 Gew.-% der Gesamtfaser bildet und dass diese Komponente vorzugsweise aus einem Polyolefin, sehr bevorzugt aus einem Polypropylen besteht.

5. Verfahren nach einem der Ansprüche 1 bis 4, **dadurch gekennzeichnet, dass** die erste flächige Heißfluid-Verfestigung auf dem Ablagesiebband (8) durchgeführt wird.

6. Verfahren nach einem der Ansprüche 1 bis 5, **dadurch gekennzeichnet, dass** in der ersten Verfestigungsstufe bzw. bei der ersten Heißfluid-Verfestigung mit einer Fluidtemperatur gearbeitet wird, die unterhalb des Schmelzpunktes der am höchsten schmelzenden Komponente der Fasern liegt und bei der zumindest eine niedriger schmelzende Komponente der Fasern angeschmolzen bzw. aufgeschmolzen wird.

7. Verfahren nach einem der Ansprüche 1 bis 6, **dadurch gekennzeichnet, dass** die Vliesbahn (9) nach Durchlaufen der ersten Verfestigungsstufe bzw. der ersten Heißfluidverfestigung in zumindest einer Kühlzone (16) gekühlt wird und danach durch die zweite Verfestigungsstufe bzw. durch die zweite Heißfluidverfestigung geführt wird.

8. Verfahren nach einem der Ansprüche 1 bis 7, **dadurch gekennzeichnet, dass** in der zweiten Verfestigungsstufe bzw. in dem Doppelbandofen (17) mit einer Fluidtemperatur gearbeitet wird, die unterhalb des Schmelzpunktes der am höchsten schmelzenden Komponente der Fasern liegt.

9. Verfahren nach einem der Ansprüche 1 bis 8, **dadurch gekennzeichnet, dass** die Vliesbahn (9) in der ersten Verfestigungsstufe bzw. in der ersten Heißfluid-Verfestigung und/oder in der zweiten Verfestigungsstufe bzw. in dem Doppelbandofen (17) von einem heißen Fluid, insbesondere von heißer Luft mit einer Anströmgeschwindigkeit von 0,2 bis 15 m/s, bevorzugt von 1 bis 5 m/s und sehr bevorzugt von 1 bis 3 m/s angeströmt wird.

10. Verfahren nach einem der Ansprüche 1 bis 9, **dadurch gekennzeichnet, dass** die Vliesbahn (9) nach Durchlaufen der zweiten Verfestigungsstufe bzw. des Doppelbandofens (17) gekühlt wird.

11. Verfahren nach einem der Ansprüche 1 bis 10, **dadurch gekennzeichnet, dass** die Vliesbahn (9) elektrisch aufgeladen wird und zweckmäßigerweise nach Durchlaufen der beiden Verfestigungsstufen elektrisch aufgeladen wird und vorzugsweise im Anschluss daran aufgewickelt wird.

12. Verfahren nach einem der Ansprüche 1 bis 11, **dadurch gekennzeichnet, dass** die Fasern als Endlosfilamente (1) - insbesondere aus thermoplastischem Kunststoff - mit der Spinnerette (2) ersponnen werden, dass die Endlosfilamente (1) nach ihrer Kühlung in zumindest einer Kühlvorrichtung (3) mittels zumindest einer Verstreckvorrichtung (5) verstreckt werden und dass die verstreckten Endlosfilamente (1) auf der Ablageeinrichtung zur Vliesbahn abgelegt werden und dass die Ablageeinrichtung bevorzugt als Ablagesiebband (8) ausgebildet ist.

13. Verfahren nach einem der Ansprüche 1 bis 12, **dadurch gekennzeichnet, dass** die Endlosfilamente (1) durch ein geschlossenes Aggregat aus Kühlvorrichtung (3) und Verstreckvorrichtung (5) geführt werden, in dem außer der Zuführung des Kühlfluids bzw. der Kühlluft in der Kühlvorrichtung (3) keine weitere Fluidzuführung bzw. Luftzuführung erfolgt.

14. Vorrichtung zur Herstellung eines Vlieses aus Fasern, vorzugsweise aus thermoplastischem Kunststoff - insbesondere zur Durchführung eines Verfahrens nach einem der Ansprüche 1 bis 13 -, wobei zumindest eine Spinnerette (2) zum Erspinnen der Fasern, zumindest eine Kühlvorrichtung (3) zum Kühlen der Fasern und zumindest eine Ablageeinrichtung zur Ablage der Fasern zur Vliesbahn (9) vorgesehen ist, **dadurch gekennzeichnet, dass** zumindest zwei, vorzugsweise zwei Verfestigungsstufen für eine Heißfluid-Verfestigung der Vliesbahn (9) vorhanden sind, wobei die erste Verfestigungsstufe zur flächigen Beaufschlagung der auf dem Ablagesiebband (8) geführten Vliesbahn (9) mit einem heißen Fluid bzw. mit Heißluft eingerichtet ist und dass die zweite Verfestigungsstufe zumindest einen Doppelbandofen (17) aufweist, in dem die Vliesbahn (9) zwischen zwei umlaufenden Bändern bzw. Endlosbändern geführt wird und in dem die Vliesbahn (9) flächig mit einem heißen Fluid bzw. mit Heißluft beaufschlagbar ist und in dem zugleich flächig Druck auf die Vliesbahn (9) ausübbar ist.

15. Vorrichtung nach Anspruch 14, **dadurch gekennzeichnet, dass** die erste Verfestigungsstufe zumindest einen über dem Ablagesiebband angeordneten beheizten Durchström-Ofen (13) zur flächigen Beaufschlagung der auf dem Ablagesiebband (8) geführten Vliesbahn (9) mit einem heißen Fluid bzw. mit Heißluft aufweist.

16. Vorrichtung nach einem der Ansprüche 14 oder 15, **dadurch gekennzeichnet, dass** die Ablageeinrichtung zwischen dem Ablagebereich der Fasern und der ersten Verfestigungsstufe kompaktierwalzenfrei bzw. presswalzenfrei ausgebildet ist.

17. Vorrichtung nach einem der Ansprüche 14 bis 16, **dadurch gekennzeichnet, dass** im Anschluss an die beiden Verfestigungsstufen eine elektrische Aufladeeinrichtung (23) zum elektrischen Aufladen der Vliesbahn vorgesehen ist.

18. Vorrichtung nach einem der Ansprüche 14 bis 17, **dadurch gekennzeichnet, dass** im Anschluss an die Kühlvorrichtung (3) für die Kühlung der Fasern zumindest eine Verstreckvorrichtung (5) zum Verstrecken der Fasern vorhanden ist und wobei zwischen der Verstreckvorrichtung (5) und der Ablageeinrichtung zumindest ein Diffusor (10, 11) angeordnet ist.

19. Vorrichtung nach einem der Ansprüche 14 bis 18, **dadurch gekennzeichnet, dass** die Ablageeinrichtung als Ablagesiebband (8) ausgebildet ist und wobei die Siebbandzone zwischen dem Ablagebereich der Fasern und der ersten Verfestigungsstufe kompaktierwalzenfrei bzw. presswalzenfrei ausgebildet ist.

## Claims

1. Method for producing a nonwoven fabric from fibres, in particular from thermoplastic material, wherein the fibres are spun by means of at least one spinneret (2), then cooled and deposited on a depositing device to form a nonwoven web, **characterized in that** the nonwoven web (9) is subjected to hot fluid consolidation in each case in at least two consecutive consolidation stages, that in a first consolidation stage the surface of the nonwoven web (9) is subjected to a hot fluid - in particular hot air - and that then in a second consolidation stage - preferably in a double-belt furnace (17) - the surface of the nonwoven web (9) is subjected to a hot fluid, in particular hot air and that additionally and simultaneously here, pressure is applied to the surface of the nonwoven web.

2. The method according to claim 1, **characterized in that** the surface pressure application to the nonwoven web takes place at a pressure higher than 2 Pa, preferably higher than 3 Pa and preferably higher than 4 Pa.

3. The method according to one of claims 1 or 2, **characterized in that** the fibres are spun as multicomponent fibres, in particular as bicomponent fibres and in particular as a segmented-pie configuration and that the fibres are spun as a mixture of fibres from at least two different types of fibres.

4. The method according to one of claims 1 to 3, **characterized in that** multicomponent fibres or bicomponent fibres are used in which one component forms more than 50 wt.%, preferably more than 55 wt.% of the total fibres and that this component preferably consists of a polyolefin, very preferably of a polypropylene.

5. The method according to one of claims 1 to 4, **characterized in that** the first surface hot fluid consolidation is carried out on the foraminous deposition belt (8).

6. The method according to one of claims 1 to 5, **characterized in that** the first consolidation stage or the first hot-fluid consolidation is operated at a fluid temperature which lies below the melting point of the highest-melting component of the fibres and at which at least one lower-melting component of the fibres is melted or fused.

7. The method according to one of claims 1 to 6, **characterized in that** after running through the first consolidation stage or the first hot fluid consolidation the nonwoven web (9) is cooled in at least one cooling zone (16) and is then guided through the second consolidation stage or through the second hot fluid consolidation.

8. The method according to one of claims 1 to 7, **characterized in that** the second consolidation stage or the double-belt furnace (17) is operated at a fluid temperature which lies below the melting point of the highest-melting component of the fibres.

9. The method according to one of claims 1 to 8, **characterized in that** in the first consolidation stage or in the first hot fluid consolidation and/or in the second consolidation stage or in the double-belt furnace (17) the nonwoven web (9) is subjected to a flow of hot fluid, in particular of hot air with an inflow velocity of 0.2 to 15 m/s, preferably of 1 to 5 m/s and very preferably of 1 to 3 m/s.

10. The method according to one of claims 1 to 9, **characterized in that** the nonwoven web (9) is cooled after passing through the second consolidation stage or the double-belt furnace (17).

11. The method according to one of claims 1 to 10, **characterized in that** the nonwoven web (9) is electrically charged and expediently is electrically charged after passing through the two consolidation stages and preferably is then wound.

12. The method according to one of claims 1 to 11, **characterized in that** the fibres are spun as continuous filaments (1) - in particular of thermoplastic material - using the spinneret (2), that after the cooling thereof in at least one cooling device (3) the continuous filaments (1) are stretched by means of at least one stretching device (5) and that the stretched continuous filaments (1) are deposited on the depositing device to form the nonwoven web and that the depositing device is preferably formed as a foraminous deposition belt (8).

13. The method according to one of claims 1 to 12, **characterized in that** the continuous filaments (1) are guided through a closed system comprising cooling device (3) and stretching device (5) in which apart from the supply of the cooling fluid or the cooling air in the cooling device (3) no further supply of fluid or supply of air takes place.

14. Apparatus for producing a nonwoven fabric from fibres, preferably from thermoplastic material - in particular for carrying out a method according to one of claims 1 to 13 - wherein at least one spinneret (2) is provided for spinning the fibres, at least one cooling device (3) for cooling the fibres and at least one depositing device for depositing the fibres to form a nonwoven web (9) **characterized in that** at least two, preferably two consolidation stages are provided for a hot fluid consolidation of the nonwoven web (9), wherein the first consolidation stage is adapted for application of a hot fluid or hot air to the surface of the nonwoven web (9) guided on the foraminous deposition belt (8) and that the second consolidation stage comprises at least one double belt furnace (17) in which the nonwoven web (9) is guided between two circulating belts or continuous belts and in which the surface of the nonwoven web (9) can be subjected to a hot fluid or to hot air and in which at the same time surface pressure can be applied to the nonwoven web (9) .

15. The apparatus according to claim 14, **characterized in that** the first consolidation stage comprises at least one heated continuous flow furnace (13) arranged above the foraminous deposition belt for application of a hot fluid or hot air to the surface of the nonwoven web (9) guided on the foraminous deposition belt (8).

16. The apparatus according to one of claims 14 or 15, **characterized in that** the deposition device is formed between the deposition region of the fibres and the first consolidation stage free from compacting rollers or free from pressing rollers.

17. The apparatus according to one of claims 14 to 16, **characterized in that** following the two consolidation stages an electrical charging device (23) is provided for electrical charging of the nonwoven web.

18. The apparatus according to one of claims 14 to 17, **characterized in that** following the cooling device (3) for cooling the fibres at least one stretching device (5) is provided for stretching the fibres and wherein at least one diffuser (10, 11) is provided between the stretching device (5) and the deposition device.

19. The apparatus according to one of claims 14 to 18, **characterized in that** the deposition device is configured as a foraminous deposition belt (8) and wherein the foraminous belt zone is formed between the deposition region of the fibres and the first consolidation stage free from compacting rollers or free from pressing rollers.

## Revendications

1. Procédé, destiné à fabriquer un non-tissé en fibres, notamment en une matière thermoplastique, les fibres étant tissées à l'aide d'au moins une bobinette (2), refroidies par la suite et déposées sur un système de dépose en une bande de non-tissé, **caractérisé en ce qu'**on soumet la bande de non-tissé (9) au cours d'au moins deux étapes de solidification consécutives à chaque fois une solidification au fluide chaud, **en ce que** dans une première étape de solidification, on soumet la bande de non-tissé (9) en nappe à un fluide chaud (notamment à de l'air chaud) et **en ce que** par la suite, dans une deuxième étape de solidification, on soumet en nappe la bande de non-tissé (9) (de préférence dans un four à double bande (17)) à un fluide chaud (notamment à de l'air chaud) et **en ce qu'**ici, on exerce en supplément et simultanément une pression en nappe sur la bande de non-tissé.

2. Procédé selon la revendication 1, **caractérisé en ce que** l'exercice d'une pression en nappe sur la bande de non-tissé s'effectue avec une pression supérieure à 2 Pa, de préférence supérieure à 3 Pa et de manière préférentielle, supérieure à 4 Pa.

3. Procédé selon l'une quelconque des revendications 1 ou 2, **caractérisé en ce qu'**on tisse les fibres sous la forme de fibres à multicomposants, notamment sous la forme de fibres à bicomposants et **en ce qu'**elles présentent notamment une configuration de type tarte segmentée ou **en ce qu'**on tisse les fibres sous la forme d'un mélange de fibres, composé d'au moins deux différents types de fibres.

4. Procédé selon l'une quelconque des revendications 1 à 3, **caractérisé en ce qu'**on travaille avec des fibres à multicomposants ou avec des fibres à bicomposants dans lesquelles un composant correspond à plus de 50 % en poids, de préférence à plus de 55 % en poids de la fibre totale et ce que ledit composant consiste de préférence dans une polyoléfine, de manière très préférentielle, dans un polypropylène.

5. Procédé selon l'une quelconque des revendications 1 à 4, **caractérisé en ce qu'**on procède à la première solidification en nappe au fluide chaud sur la bande tamiseuse de dépose (8).

6. Procédé selon l'une quelconque des revendications 1 à 5, **caractérisé en ce que** dans la première étape de solidification ou lors de la première solidification au fluide chaud, on travaille à une température du fluide qui est inférieure au point de fusion du composant des fibres qui présente le point de fusion le plus élevé et à laquelle au moins un composant des fibres à point de fusion moins élevé commence à fondre ou fond.

7. Procédé selon l'une quelconque des revendications 1 à 6, **caractérisé en ce qu'**on refroidit la bande de non-tissé (9) après le passage de la première étape de solidification ou de la première solidification au fluide chaud dans au moins une zone de refroidissement (16) et on la conduit ensuite à travers la deuxième étape de solidification ou à travers la deuxième solidification au fluide chaud.

8. Procédé selon l'une quelconque des revendications 1 à 7, **caractérisé en ce que** dans la deuxième étape de solidification ou dans le four à double bande (17), on travaille à une température du fluide qui est inférieure au point de fusion du composant des fibres qui présente le point de fusion le plus élevé.

9. Procédé selon l'une quelconque des revendications 1 à 8, **caractérisé en ce que** dans la première étape de solidification ou lors de la première solidification au fluide chaud et/ou dans la deuxième étape de solidification ou dans le four à double bande (17), la bande de non-tissé (9) est soumise à l'afflux d'un fluide chaude, notamment d'air chaud, à une vitesse d'affluence de 0,2 à 15 m/s, de préférence de 1 à 5 m/s et de manière très préférentielle, de 1 à 3 m/s.

10. Procédé selon l'une quelconque des revendications 1 à 9, **caractérisé en ce qu'**on refroidit la bande de non-tissé (9) après le passage de la deuxième étape de solidification ou du four à double bande (17).

11. Procédé selon l'une quelconque des revendications 1 à 10, **caractérisé en ce qu'**on charge électriquement la bande de non-tissé (9) et on la charge opportunément après le passage des deux étapes de solidification et on l'enroule de préférence par la suite.

12. Procédé selon l'une quelconque des revendications 1 à 11, **caractérisé en ce qu'**on tisse les fibres sous la forme de filaments continus (1) (notamment en matière thermoplastique) à l'aide de la bobinette (2), **en ce qu'**après leur refroidissement dans au moins un dispositif de refroidissement (3), on étire les filaments continus (1) à l'aide d'au moins un dispositif d'étirage (5) et **en ce qu'**on dépose les filaments continus (1) étirés sur le système de dépose pour former la bande de non-tissé et **en ce que** le système de dépose est conçu de préférence sous la forme d'une bande tamiseuse de dépose (8).

13. Procédé selon l'une quelconque des revendications 1 à 12, **caractérisé en ce qu'**on conduit les filaments continus (1) à travers un groupe fermé composé du dispositif de refroidissement (3) et du dispositif d'étirage (5) dans lequel, hormis l'apport du fluide de refroidissement dans le dispositif de refroidissement (3) n'a lieu aucun apport de fluide ou apport d'air supplémentaire.

14. Dispositif, destiné à fabriquer un non-tissé en fibres, de préférence en matière thermoplastique (notamment pour la réalisation d'un procédé selon l'une quelconque des revendications 1 à 13), au moins une bobinette (2) pour tisser les fibres, au moins un dispositif de refroidissement (3) pour refroidir les fibres et au moins un système de dépose pour déposer les fibres pour former la bande de non-tissé (9) étant prévus, **caractérisé en ce qu'**au moins deux, de préférence deux étapes de solidification sont présentes pour une solidification au fluide chaud de la bande de non-tissé (9), la première étape de solidification étant aménagée pour soumettre en nappe la bande de non-tissé (9) conduite sur la bande tamiseuse de dépose (8) à un fluide chaude ou à de l'air chaud et **en ce que** la deuxième étape de solidification comporte au moins un four à double bande (17) dans lequel la bande de non-tissé (9) est conduite entre deux bandes en révolution ou bandes continues et dans lequel la bande de non-tissé (9) est susceptible d'être soumise en nappe à un fluide chaud ou à de l'air chaud et dans lequel, simultanément, une pression est susceptible d'être exercée en nappe sur la bande de non-tissé (9).

15. Dispositif selon la revendication 14, **caractérisé en ce que** la première étape de solidification comporte au moins un four de passage (13) chauffé, placé au-dessus de la bande tamiseuse de dépose, pour soumettre en nappe la bande de non-tissé (9) conduite sur la bande tamiseuse de dépose (8) à un fluide chaud ou à de l'air chaud.

16. Dispositif selon l'une quelconque des revendications 14 ou 15, **caractérisé en ce que** le système de dépose entre la zone de dépose des fibres et la première étape de solidification est conçu en étant exempt de rouleaux compacteurs ou de rouleaux presseurs.

17. Dispositif selon l'une quelconque des revendications 14 à 16, **caractérisé en ce qu'**à la suite des deux étapes de solidification est prévu un système de charge électrique (23) pour charger électriquement la bande de non-tissé.

18. Dispositif selon l'une quelconque des revendications 14 à 17, **caractérisé en ce qu'**à la suite du dispositif de refroidissement (3) destiné à refroidir les fibres est présent au moins un dispositif d'étirage (5), destiné à étirer les fibres et entre le dispositif d'étirage (5) et le système de dépose étant placé au moins un diffuseur (10, 11).

19. Dispositif selon l'une quelconque des revendications 14 à 18, **caractérisé en ce que** le système de dépose est conçu sous la forme d'une bande tamiseuse de dépose (8) et la zone de bande tamiseuse entre la zone de dépose des fibres et la première étape de solidification étant conçue en étant exempte de rouleaux compacteurs ou de rouleaux presseurs.
